# EUROPEAN PATENT APPLICATION

(11) **EP 4 801 006 A1**
(43) Date of publication of application: **02.09.2026**
(21) Application number: 26160860.8
(22) Date of filing: 26.02.2026
(51) Int. Cl.: H04L 47/127, H04L 41/147

(54) **APPLICATION-AWARE CONGESTION CONTROL**

(30) Priority: 26.02.2025 US 202519063953
(71) Applicant: Mellanox Technologies, Ltd., 2069200 Yokneam (IL)
(72) Inventor: SHPIGELMAN, Yuval, 2069200 Yokneam (IL); SHABTAI, Omer, 2069200 Yokneam (IL); KADOSH, Matty, 2069200 Yokneam (IL); POTLURI, Sreeram, 2069200 Yokneam (IL); TIFFANY, Zachary, 2069200 Yokneam (IL); KATZ, Noam, 2069200 Yokneam (IL); ALMOG, Ariel, 2069200 Yokneam (IL); LEVINSON, Rotem, 2069200 Yokneam (IL); ROMANO, Yaakov, 2069200 Yokneam (IL); KLORIN, Einav Liya Mor, 2069200 Yokneam (IL)
(74) Representative: Mathys & Squire

(57) **Abstract**

Apparatuses, systems, computing devices, switches, network endpoints, and methods to handle congestion control. In at least one embodiment, a circuit is configured to identify, based on data associated with an application, one or more factors associated with the application, generate a prediction, based on the one or more factors, of a pattern of traffic to be sent by the application, select a transmission rate for the application based on predicted pattern, and control a rate of traffic sent by the application based on the transmission rate.

## Description

### TECHNICAL FIELD

At least one embodiment is generally directed toward systems and methods for congestion control and, in particular, toward a system capable of providing congestion control using application data and methods of operating the same.

### BACKGROUND

Applications utilizing a network to perform collective operations, such as reduction operations, can result in significant network activity. Such operations may involve the aggregation of data from multiple sources and enable efficient computation across networked components. Distributed systems can coordinate complex tasks, streamline workflows, and process large datasets. Such operations may involve multiple devices or nodes communicating simultaneously over a shared fabric, potentially leading to relatively high levels of network utilization.

### SUMMARY

The invention is defined by the claims. In order to illustrate the invention, aspects and embodiments which may or may not fall within the scope of the claims are described herein.

Congestion caused by applications performing collective operations on a fabric can result in increased latency, reduced throughput, and inefficient utilization of network resources. Such congestion can degrade overall system performance, particularly in distributed environments where high-speed communication is critical for maintaining operational efficiency. Efficient handling of such operations may enable better performance in distributed computing systems, data centers, and other environments relying on scalable networked infrastructure.

The systems and methods described herein utilize information from one or more applications to determine current or expected future traffic patterns used by such applications when communicating over a network. Using the current or expected future traffic patterns, the systems and methods configure a network interface controller (NIC) or otherwise control the transmission of data in an optimal manner. By utilizing such traffic pattern information, the systems and methods described herein can avoid or mitigate the congestion issues which affect conventional systems.

In accordance with one or more embodiments described herein, a computing device, which may include a switch or multiple switches, is described. According to at least some embodiments, the problem of congestion affecting a switch or other computing device in the network may be addressed by receiving information from an application describing a future traffic pattern and/or other factors which may affect optimal rates of data transmission. For example, a NIC may be configured to receive data from an application, determine or predict a future traffic pattern, and implement a congestion control algorithm to control the rate of data transmitted by the application via the NIC to reduce the risk of congestion causing sub-optimal network communication. Embodiments of the present disclosure provided herein describe a solution that is capable of reducing or eliminating the amount of congestion over a network used by a collective application by leveraging information about the application, resulting in improved performance of the network.

Example aspects of the present disclosure provide a system comprising one or more circuits to: identify, based on data associated with an application, one or more factors associated with the application; generate a prediction, based on the one or more factors, of a pattern of traffic to be sent by the application; select a transmission rate for the application based on predicted pattern; and control a rate of traffic sent by the application based on the transmission rate.

Aspects include wherein the one or more factors comprise one or more of: a message size, a network topology, a communication algorithm associated with the application, a number of peers associated with the application, and an operation associated with the application.

Aspects include wherein the traffic is egressing from the system.

Aspects include wherein the one or more factors are identified based on data received by the system from the application.

Aspects include wherein the one or more circuits are further to generate a prediction of a change in the pattern of traffic.

Aspects include wherein selecting the transmission rate is performed in response to the prediction of the change in the pattern of traffic.

Aspects include wherein the one or more circuits are further to select a congestion control algorithm based on the prediction of the pattern of traffic.

Aspects include wherein the transmission rate is a percentage of a full wire speed.

In another illustrative example, a NIC is described to include one or more circuits to: identify, based on data associated with an application, one or more factors associated with the application; generate a prediction, based on the one or more factors, of a pattern of traffic to be sent by the application; select a transmission rate for the application based on predicted pattern; and control a rate of traffic sent by the application based on the transmission rate.

Aspects include wherein the one or more factors comprise one or more of: a message size, a network topology, a communication algorithm associated with the application, a number of peers associated with the application, and an operation associated with the application.

Aspects include wherein the traffic is egressing from the system.

Aspects include wherein the one or more factors are identified based on data received by the system from the application.

Aspects include wherein the one or more circuits are further to generate a prediction of a change in the pattern of traffic.

Aspects include wherein selecting the transmission rate is performed in response to the prediction of the change in the pattern of traffic.

Aspects include wherein the one or more circuits are further to select a congestion control algorithm based on the prediction of the pattern of traffic.

Aspects include wherein the transmission rate is a percentage of a full wire speed.

In another example, a method is described to include: identifying, based on data associated with an application, one or more factors associated with the application; generating a prediction, based on the one or more factors, of a pattern of traffic to be sent by the application; selecting a transmission rate for the application based on predicted pattern; and controlling a rate of traffic sent by the application based on the transmission rate.

Aspects include wherein the one or more factors comprise one or more of: a message size, a network topology, a communication algorithm associated with the application, a number of peers associated with the application, and an operation associated with the application.

Aspects include wherein the traffic is egressing from the system.

Aspects include wherein the one or more factors are identified based on data received by the system from the application.

Aspects include wherein the one or more circuits are further to generate a prediction of a change in the pattern of traffic.

Aspects include wherein selecting the transmission rate is performed in response to the prediction of the change in the pattern of traffic.

Aspects include wherein the one or more circuits are further to select a congestion control algorithm based on the prediction of the pattern of traffic.

Aspects include wherein the transmission rate is a percentage of a full wire speed.

Apparatuses, systems, computing devices, switches, network endpoints, and methods to handle congestion control. In at least one embodiment, a circuit is configured to identify, based on data associated with an application, one or more factors associated with the application, generate a prediction, based on the one or more factors, of a pattern of traffic to be sent by the application, select a transmission rate for the application based on predicted pattern, and control a rate of traffic sent by the application based on the transmission rate.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF THE SEVERAL VIEWS OF THE DRAWINGS

The present disclosure is described in conjunction with the appended figures, which are not necessarily drawn to scale:
Fig. 1 illustrates a network environment according to at least one embodiment;
Fig. 2 illustrates a computing device according to at least one embodiment;
Fig. 3 is a block diagram of a system according to at least one embodiment;
Fig. 4 is a flowchart of a method according to at least one embodiment;
Fig. 5 illustrates an example data center, in accordance with at least one embodiment;
Fig. 6 illustrates a processing system, in accordance with at least one embodiment; and
Fig. 7 illustrates a computer system, in accordance with at least one embodiment.

### DETAILED DESCRIPTION

The present description provides embodiments only, and is not intended to limit the scope, applicability, or configuration of the claims. Rather, the description will provide those skilled in the art with an enabling description for implementing the described embodiments. It is understood that various changes may be made in the function and arrangement of elements without departing from the spirit and scope of the appended claims.

It will be appreciated from the following description, and for reasons of computational efficiency, that the components of the system can be arranged at any appropriate location within a distributed network of components without impacting the operation of the system.

Furthermore, it should be appreciated that the various links connecting the elements can be wired, traces, or wireless links, or any appropriate combination thereof, or any other appropriate known or later developed element(s) that is capable of supplying and/or communicating data to and from the connected elements. Transmission media used as links, for example, can be any appropriate carrier for electrical signals, including coaxial cables, copper wire and fiber optics, electrical traces on a printed circuit board (PCB), or the like.

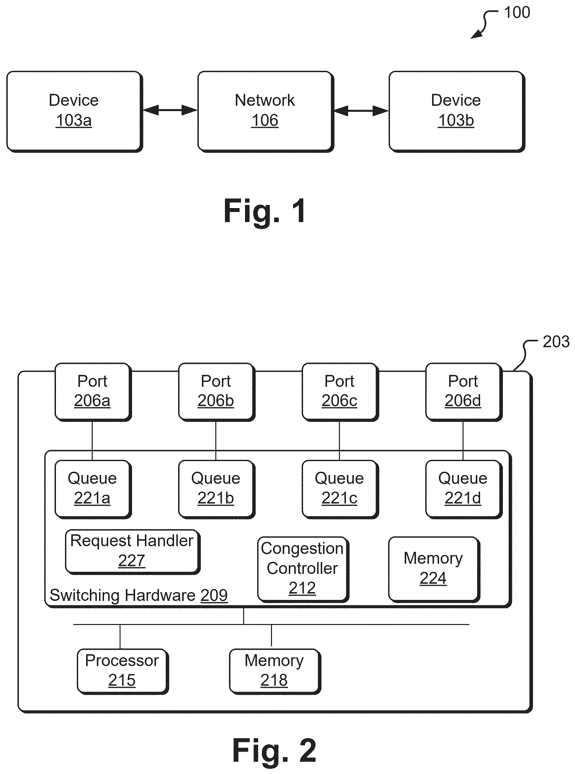

Referring now to Figs. 1-7, various systems and methods for performing congestion control will be described. The term packet as used herein should be construed to mean any suitable discrete amount of digitized information.

Fig. 1 illustrates example components of a system 100 in which devices 103a, 103b communicate via a network 106. Each device 103a, 103b may be a computing device 103, such as a switch or another computing device. Each device 103a, 103b may include a NIC. By way of non-limiting examples, a NIC as described herein may be implemented as a network interface card, a network adapter, a Local Area Network (LAN) adapter, a physical network interface, a host channel adapter (HCA), an Ethernet NIC, and the like.

The first computing device 103a may be connected to the second computing device 103b over a wired and/or wireless connection (e.g., including the network 106). In at least one embodiment, the network 106 may be configured to facilitate the transmission of data packets and/or messages. Communication via the network 106 may be based on various communication technologies including Ethernet and may be implemented in any number of wired and/or wireless configurations.

In at least one embodiment, the network 106 incorporates a series of routers, switches, and/or other networking hardware to provide a path of data transmission between the computing devices 103a, 103b. A computing device 103 as described herein may be a computing system or device which may function as a switch or any other type of device capable of receiving and transmitting data via the network 106. A computing device 103 may also or alternatively be or include a processing device, such as a graphics processing unit (GPU), which may function as a processor and may send and/or receive data either via the network 106 or from other processing devices directly. A computing device 103 may be referred to herein as a switch; however, it should be appreciated that references to a switch may be interpreted as being references to any other type of computing device 103 such as a GPU. While systems and methods described herein are presented in the context of a computing device, it should be understood that the term "computing device" encompasses any device capable of transmitting and/or receiving data. This may include, but is not limited to, desktop computers, laptops, tablets, smartphones, servers, routers (such as wireless, wired, core, edge, or mesh routers), modems (including cable, DSL, fiber optic, or satellite modems), combination modem-router devices, network interface cards (e.g., Ethernet, wireless, fiber, PCIe, or USB NICs), processing circuits, such as GPUs, central processing units (CPUs), application-specific integrated circuits (ASICs), field programmable gate arrays (FPGAs), or other circuitry capable of performing computations, gaming consoles, smart TVs, wearable devices (e.g., smartwatches), network-attached storage (NAS) devices, Internet of Things (IoT) devices (e.g., smart home hubs, sensors, cameras), printers, scanners, point-of-sale (POS) terminals, digital cameras, drones, medical devices, embedded vehicle systems (e.g., infotainment systems), single-board computers, external storage drives, and virtual reality (VR) headsets.

Systems and methods described herein may be used in the context of data centers. Furthermore, while systems and methods described herein are described in terms of computing devices 103, such as switches, which send and receive packets of data via ports, it should be appreciated that the same or similar systems and methods may be utilized by GPUs. Data centers and other computing environments, such as those employing artificial intelligence (AI) training systems, use a network infrastructure, which may be referred to as a fabric, which provides interconnectivity between various components, facilitating rapid data transfer and communication for handling large volumes of data and computationally intensive tasks. Such computing environments may utilize a fabric of processing devices such as GPUs and switches to provide computing capabilities for hosts devices such as personal computers and servers.

The present disclosure describes a system and method for enabling a device, such as a switch, a GPU, or other computing system or device, to address the conventional problem of congestion affecting performance of a collective of processing devices which may cause a delay in the amount of time it takes data to be processed by the collective. For example, a collective of processing devices may operate together to perform an operation such as a reduction. The processing devices of the collective may transmit data between other devices of the collective. If the processing devices exceed the capabilities of the network, congestion may occur. Conventional congestion control systems result in sub-optimal congestion control performance. Embodiments of the present disclosure provided herein describe a solution that is capable of avoiding or reducing congestion by utilizing data associated with applications executing on the processing devices to predict traffic patterns and adjust transmission rates accordingly to mitigate or eliminate congestion in the network, resulting in improved performance of the devices of the collective.

Illustratively, and without limitation, disclosed systems and methods may be used in a computing environment including one or more devices in a data center. For instance, the computing environment may include a plurality of GPUs that communicate with one another via a high-performance high-bandwidth interconnect fabric such as NVIDIA's NVLINK^{™} as one example. Other systems may provide a single GPU that is connected to NVLINK^{™}.

The NVLINK^{™} interconnect fabric-which may include communication links, nodes, interconnect management devices, and/or other devices-may provide multiple high-speed links connecting nodes in the form of GPUs. Each node in the computing environment may be connected with at least one other node via one or more high-speed communication links.

The one or more computing devices 103 may be in communication with nodes either directly or indirectly. Such a network of computing devices may be useful in various settings, from data centers and cloud computing infrastructures to AI systems.

As noted above, nodes of a fabric may be computing devices 103, such as personal computers, servers, or other computing devices, and may also include processing devices which may include one or more processing circuits, such as GPUs, CPUs, ASICs, FPGAs, or other circuitry capable of performing computations, as well as memory and storage resources to run software applications, handle data processing, and perform specific tasks as required. Computing devices 103 may be responsible for executing applications and performing data processing tasks. Computing devices 103 as described herein can range from servers in a data center to desktop computers in a network, or to devices such as IoT sensors and smart devices. In some implementations, Computing devices 103 may also or alternatively include hardware such as GPUs for handling intensive tasks for machine learning, AI workloads, or other complex processes.

The use of computing devices 103 to send and receive data via the network 106 may be configured to ensure that data packets are routed with considerations for network congestion, latency, and packet loss, thereby maintaining high reliability and performance standards in communication. Network 106 may employ network protocols that manage data integrity, security, and prioritization, ensuring that sensitive or critical information is transmitted securely and efficiently.

In at least one embodiment, the configuration of network 106 allows for scalability and flexibility in its operations. For example, additional nodes can be integrated into the network without significant reconfiguration of existing infrastructure. Further, network 106 may support various types of data transmissions, including streaming data, bulk data transfer, and real-time communication. Computing devices 103a, 103b may be configured to communicate via the network 106 as well as with external networks or systems through gateways or similar network interfaces.

Each computing device 103 may operate as or may include a computing unit, such as a personal computer, a server, a GPU, or other computing and/or processing device, and may be responsible for executing applications and performing data processing tasks. Computing devices 103 as described herein may range from servers in a data center to desktop computers in a network, or to devices such as IoT sensors and smart devices, as examples.

Network endpoints communicating via computing devices 103 such as switches may operate as a high-performance computing (HPC) cluster. A cluster of nodes or a network 106 may comprise numerous interconnected computing devices 103 operating as servers, each equipped with CPUs and/or GPUs. The nodes may provide computational horsepower for, as an example, training large-scale AI models or running complex scientific simulations. For AI and machine learning tasks, the computing devices 103 may comprise one or more GPUs or other processing circuitry which may be capable of handling parallel processing requirements of neural networks and other applications.

The systems and methods described herein may be used by a collective, in which a group of nodes, such as devices 103a-b, operate together to perform a task. Such a task may, for example, include AI training. A collective application as described herein may utilize a network to perform tasks which rely on communication between nodes to synchronize and share data across distributed GPUs or processors. Such a collective application may be an all-to-all collective which enables each node in a group to send data to all other nodes, facilitating the exchange of information, such as data during distributed training of large machine learning models. In some implementations, a collective application may perform reduction operations, such as summation or averaging, to aggregate data from two or more nodes. For example, in a summation reduction, each node may contribute data, and the combined result may be distributed back to all nodes using an all-reduce operation.

Different topologies may be employed to implement a collective operation, such as for all-to-all communication. Algorithms such as the ring algorithm or tree algorithm may define how data flows between nodes. In a ring algorithm, nodes may be logically arranged in a ring, with data flowing sequentially between neighbors until all nodes have exchanged data. In a tree algorithm, nodes may be logically arranged in a hierarchical structure, where data may be aggregated and disseminated through parent and child nodes in a binary tree. Such collective operations may be implemented in a collective library layer, which may serve as a network communication layer in an application software stack running on host processors. A collective library may provide APIs for operations such as reduce. The collective library layer may leverage hardware features, such as RDMA or NVLink, to achieve high throughput and low latency, ensuring that collective operations integrate seamlessly into distributed AI training workflows.

Computing devices 103 may be or include client devices which, for example, engage in AI-related, research-related, and other processor-intensive tasks, and utilize a network of computing devices 103 and other network nodes to handle the computational loads and data throughput required by such intensive applications. Such computing devices 103 may include, for example, workstations and personal computers used by researchers, data scientists, and professionals for developing, testing, and running AI models and research simulations.

A computing device 103 as referred to herein may be a node, a computing system, a switch, a NIC, a network endpoint, a network device, or any type of device comprising a number of ports and capable of receiving and sending data. A computing device 103 may act as a central node in a network. Computing devices 103 may be wired in a topology including spine switches, top-of-rack (TOR) switches, end-of-row switches, and/or leaf switches, for example. For example, a computing device 103 may include spine switch and/or a leaf switch and may connect to other computing devices 103. As a non-limiting example, the network 106 may be configured to include a multi-layer switch topology, which may include one or multiple computing devices 103 connecting one or multiple network endpoints. Other non-limiting examples of network topologies that may be utilized in the network 106 include a dragonfly network, a two-level fat tree network, a three-level network, or the like. Such a network of computing devices 103 may provide use cases in various settings, from data centers and cloud computing infrastructures to artificial intelligence systems.

Computing devices 103 may be capable of receiving, processing, and forwarding data, e.g., messages, to appropriate destinations within the network 106, such as other computing devices 103 and/or network endpoints. In some implementations, a computing device 103 may be included in a box, a platform, or a case which may contain one or more computing devices 103 as well as one or more power supply devices and/or other components.

As illustrated in Fig. 2, a computing device 203 as referred to herein may be a node, a computing system, a switch, a NIC, a network endpoint, a network device, or any type of device comprising a number of ports 206a-d and capable of receiving and sending data. The ports 206a-d of the computing device 203 may be used to interconnect with other computing devices 203, such as nodes, computing systems, network endpoints, and network devices to form a network. A computing device 203 may act as a central node in a network. Computing devices 203 may be wired in a topology including spine switches, TOR switches, end-of-row switches, and/or leaf switches, for example. For example, a network of computing devices 203 may include spine switch(es) and/or leaf switch(es) and may connect to other computing devices 203. As a non-limiting example, a network may be configured to include a multi-layer switch topology, which may include one or multiple computing devices 203 connecting one or multiple network endpoints. Other non-limiting examples of network topologies that may be utilized in a network include a dragonfly network, a tree network, a ring network, a fully-connected network, a two-level fat tree network, a three-level network, a Clos network, or the like. Such a network of computing devices 203 may provide use cases in various settings, from data centers and cloud computing infrastructures to artificial intelligence systems.

Computing devices 203 may be capable of receiving, processing, and forwarding data, e.g., messages, to appropriate destinations within the network, such as other computing devices 203 and/or network endpoints. In some implementations, a computing device 203 may be included in a box, a platform, or a case which may contain one or more computing devices 203 as well as one or more power supply devices and/or other components.

In some implementations, a computing device 203 may comprise one or more ports 206a-c connected to one or more ports of other computing devices 203 and/or one or more ports 206 of other network endpoints. Although the computing device 203 of Fig. 2 is illustrated to include four ports 206a-d, it should be appreciated that a computing device 203 may include greater or fewer ports than depicted. Processes, such as applications executed by network endpoints may involve transmitting data to other network endpoints of a network via computing devices 203. Data may flow through the network using one or more protocols such as transmission control protocol (TCP), user datagram protocol (UDP), or Internet protocol (IP), for example. Each computing device 203 may, upon receiving data from a network endpoint or another computing device 203, examine the data to identify a destination for the data and route the data through the network. Routing within the computing device 203 may be implemented using a combination of switching hardware 209 and other circuit(s).

The ports 206a-d of a computing device 203 may be capable of facilitating the transmission of data packets, or non-packetized data, into, out of, and through the computing device 203. Such ports 206a-d may serve as interface points where network cables may be connected, connecting the computing device 203 with other computing devices 203 and/or other nodes.

Each port 206a-d may be capable of receiving incoming data packets from other devices and/or transmitting outgoing data packets to other devices. In some implementations, ports 206a-d may be configured to operate as either dedicated ingress or egress ports 206 or may be enabled to operate in a dual functionality capable of performing ingress and egress functions. For example, an egress port 206 may be used exclusively for sending data from the computing device 203 and an ingress port 206 may be used solely for receiving incoming data into the computing device 203.

Switching hardware 209 of a computing device 203 may be capable of handling a received packet by determining a port 206 from which to send the packet and forwarding the packet from the determined port 206. Each port 206 of a computing device 203 may be associated with one or more queues 221a-d. When a packet, or data in any format, is to be sent from a port 206, the packet may be stored in a queue 221 associated with the port 206 until the port 206 is ready and/or available to send the packet.

The switching hardware 209 and/or other circuit(s) of a computing device 203 may utilize information stored in memory 218 to support routing decisions. The switching hardware 209 may include a number of queues 221a-d to support packet flows into and out of the ports 206a-d, respectively. In some embodiments, the queues 221a-d may correspond to a buffer or the like that can be used to stage or collect packets or parts of packets when received at a port 206a-d and/or for transmission by a port 206a-d.

In support of the functionality of the switching hardware 209, one or more circuits may be configured to control aspects of the switching hardware 209 to enable congestion control in relation to packets. Such circuits may include one or more processors or microprocessors and may in some implementations include a CPU, an ASIC, and/or other processing circuitry which may be capable of handling computations, decision-making, and management functions required for operation of the computing device 203. As illustrated in Fig. 2, switching hardware 209 may include a congestion controller 212, a request handler 227, and memory 224.

A congestion controller 212 as described herein may be a hardware-based or software-based system configured to manage and mitigate network congestion. The congestion controller 212 may operate to dynamically adjust message transmission rates, preventing or reducing the risk of congestion across a network. The congestion controller 212 may be implemented by an ASIC of a NIC in a computing device 203 such as a switch. The congestion controller 212 may receive application data, analyze the application data to identify factors associated with the application, generate a prediction of a traffic pattern, and select a transmission rate for one or more flows as described herein. The congestion controller 212 may also instruct a request handler 227 to implement the selected transmission rate(s).

A request handler 227 as described herein may be a hardware-based or software-based system configured to manage the scheduling of work queue elements (WQEs) and associated queue pairs (QPs). The request handler 227 may operate based on instructions received from a congestion controller. For example, the request handler 227 may receive an indication of one or more particular flows for which to control the rate and an indication of a flow rate. The request handler 227 may in response to such indications control the scheduling of WQEs associated with the indicated flow or flows such that the flow or flows transmit messages at the indicated flow rate. In some implementations, controlling the scheduling of WQEs may comprise retrieving the WQEs from one or more work queues and scheduling the WQEs at a particular rate.

Memory 224 as described herein may comprise one or more memory elements capable of storing application data, congestion control algorithms and policies, and other data. Such memory elements may include, for example, random access memory (RAM), dynamic RAM (DRAM), flash memory, non-volatile RAM (NVRAM), ternary content-addressable memory (TCAM), static RAM (SRAM), and/or memory elements of other formats. Memory elements of the memory 224 may also include one or more registers, such as general-purpose registers, special purpose registers, data registers, and other types of registers which may be used to store and retrieve information relating to application data and factors associated with applications as described below.

Circuits of a computing device 203 may be configured to handle management and control functions of the computing device 203, such as managing routing groups, setting up tables, configuring ports, and otherwise managing operation of the computing device 203. Circuits may execute software and/or firmware to configure and manage the computing device 203, such as an operating system and management tools.

Such a circuit of a computing device 203 may, for example, include a processor 215. A processor 215 of a computing device 203 may include one or more processing circuits, such as GPUs, CPUs, data processing units (DPUs), ASICs, FPGAs, or other circuit(s) capable of performing computations, as well as memory and storage resources to run software applications, handle data processing, and perform specific tasks as required. In some implementations, computing devices 203 may also or alternatively include hardware such as GPUs for handling intensive tasks for machine learning, AI workloads, or other complex processes.

In addition to the memory 224 of the switching hardware 209, a computing device 203 may also include memory 218 in the form of one or more memory elements capable of storing configuration settings, application data, operating system data, and other data, and which may be utilized by the processor 215. Such memory elements may include, for example, RAM, DRAM, flash memory, NVRAM, TCAM, SRAM, and/or memory elements of other formats. Memory elements of the memory 218 may also include one or more registers, such as general-purpose registers, special purpose registers, data registers, and other types of registers which may be used to store and retrieve information relating to applications executed by the processor 215.

Information stored in the memory 218 of the computing device 203 may be used in relation to the congestion controller 212. For example, the processor 215 may execute one or more collective applications. A collective application may utilize network resources, such as other computing devices 203 in communication with the computing device 203 to perform operations in parallel across multiple processors. Such an application may perform operations such as reduction operations.

The memory 218 of the computing device 203 may also be used to store data associated with applications executed by the processor 215 in the form of databases and/or in registers. For example, the memory 218 may comprise a register which may be used to store application data as described below.

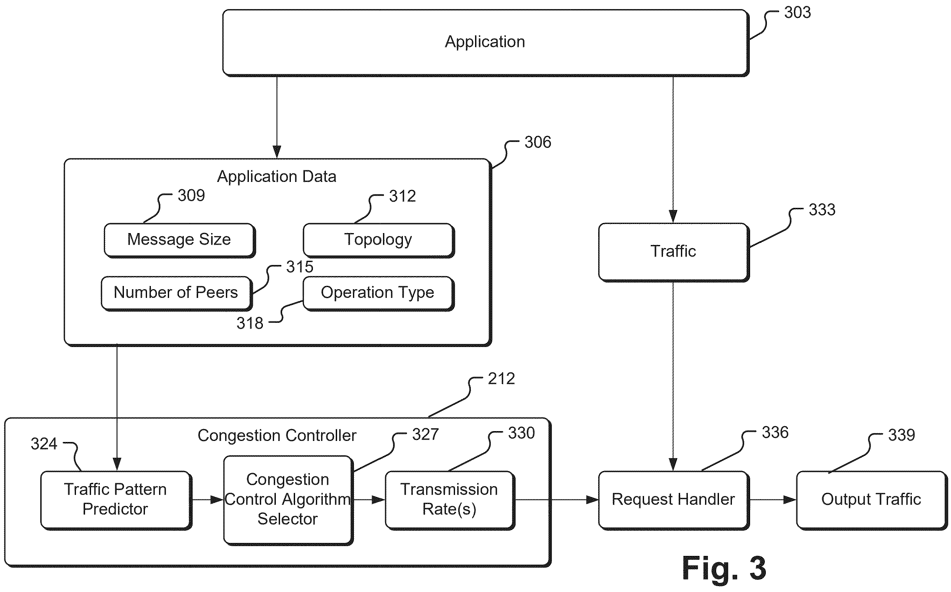

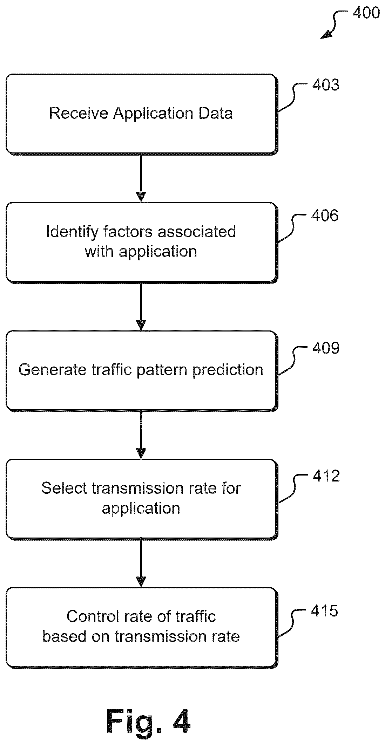

As illustrated in Fig. 3, an application 303 may be configured to generate application data 306. Such application data 306 may include, for example, message size 309, topology 312, number of peers 315, and operation type 318 information. The application data 306 may be received by a congestion controller 212 which may use the application data 306 to predict a traffic pattern using a traffic pattern predictor 324, select a congestion control algorithm using a congestion control algorithm selector 327, and select a transmission rate 330 using the selected congestion control algorithm. Next, traffic 333 from the application 303 may be handled by a request handler 336 which may control the egress of the traffic as output traffic 339 based on the selected transmission rate 330. Such a process may be as illustrated in Fig. 4 and as described below.

The application 303 may be an application executing on a processor 215 of a computing device 203. The application 303 may perform tasks that require collaboration with other computing devices in a network and may utilize network communication to participate in collective operations such as reduction. For example, in the context of distributed AI training, the application 303 may compute local gradients based on a subset of training data. Once this local computation is complete, the application 303 may next initiate a reduction operation to aggregate the gradients with gradients computed on other devices. Data output by the application to perform such tasks is represented in Fig. 3 as traffic 333.

As the application 303 executes, the application 303 may also output application data 306. The application data 306 may be read by a congestion controller 212 and may be used to inform the congestion controller of factors relating to the current or future traffic 333 output by the application 303. For example, the application data 306 may include message size 309, topology 312, number of peers 315, operation type 318, and/or other information. The information contained within the application data 306 may enable a congestion controller 212 to identify or predict a current and/or a future traffic pattern for the application 303.

Message size 309 may refer to an amount of data contained within each packet or message being exchanged between the application 303 and peers during an operation. The message size 309 may indicate a size of the packet or message in terms of bits or bytes. The message size 309 may be an estimated size of a message or packet to be sent by the application 303. In some implementations, application data 306 may indicate multiple message sizes 309. For example, the application 303 may over a time period sent packets of various message sizes as opposed to messages of a single size.

The topology 312, which may be referred to as a communication algorithm, may define how the device executing the application 303 is connected to and communicates with peers during collective operations. The topology may determine the paths data traverses the network during communication. For example, in a ring topology, each peer communicates only with its immediate neighbors, and data flows sequentially around the ring. Alternatively, a tree topology arranges peers in a hierarchical structure, where data is aggregated and disseminated in a logarithmic fashion.

The number of peers 315 may refer to a number of devices participating in the collective operation. The number of peers 315 may directly affect the amount of data that can be sent by the application 303 over the network. For example, in an all-to-one communication, each peer may be communicating with a single device. The rate at which the device may be capable of receiving such data may be a maximum line rate speed divided by the number of peers.

The operation type 318 may refer to a specific collective operation being performed or to be performed by the application 303. Examples include reduction and all-to-all operations. The operation type 318 may be used by the congestion controller 212 to determine the data flow and communication pattern among peers. For example, in a reduction operation, data from all peers is aggregated into a single result using an operation such as summation, averaging, or finding the maximum value. In an all-to-all operation, data from the application is sent to all other peers.

In some implementations, the application data 306 may specify a time period during which the application data 306 is expected to be accurate. For example, the application data 306 may include a start time, an end time, and/or a time range for the message size 309, topology 312, number of peers 315, and operation type 318. The congestion controller 212 may use the time period to determine when to control the transmission rates 330 based on the application data 306.

As an application executes, the application data 306 may change over time. For example, the pattern of traffic an application sends during its execution may change depending on events affecting operation of the application. In some implementations, each time the traffic pattern is changed, is scheduled to be changed, or is predicted to change by the application 303, the application 303 may send application data 306 to the congestion controller 212 to enable the congestion controller 212 to determine the traffic pattern has or will change. By making the application data 306 available to lower network layers, a congestion control service can take advantage of the information to adjust transmission rates based on current or expected traffic patterns.

The application 303 may interact with the congestion controller 212 by sending data or control signals to a memory location accessible to the congestion controller 212. The congestion controller 212 may be configured to poll the memory location at regular intervals. In some implementations, the application 303 may transmit packets containing the application data 306 to the congestion controller 212.

A congestion controller 212 as described herein may be implemented in hardware or software. The congestion controller 212 may be a logical circuit capable of performing the operations of a congestion controller 212 as described herein or may be a software service performed by a processing element of a NIC, such as an ASIC.

The congestion controller 212 may be configured to analyze application data 306 to predict a traffic pattern of an application 303. The predicted traffic pattern may be a current traffic pattern of traffic 333 sent by an application 303 or may be a future traffic pattern of traffic 333 sent by the application 303. The prediction of the traffic pattern may include a predicted start time and/or a predicted end time of the traffic pattern. For example, the congestion controller 212 may predict the traffic pattern will begin X amount of time from the present, will end Y amount of time from the present, and/or will last Z amount of time.

A traffic pattern as described herein may be a set of message size, topology, number of peers, operation type, and/or other features indicated by the application 303. In some implementations, if the application 303 does not supply all of the information illustrated in Fig. 3, the congestion controller 212 may be configured to predict or estimate such information. The prediction of the traffic pattern may be performed by a traffic pattern predictor 324 which may be implemented in hardware or software. The traffic pattern predictor 324 may utilize learning. For example, an AI system may be trained using machine learning (ML) to predict a traffic pattern and/or predict a start time, end time, and/or length of the traffic pattern based on an input of application data 306.

Based on the predicted traffic pattern and/or the application data 306, the congestion controller 212 may be configured to select a congestion control algorithm using a congestion control algorithm selector 327. Each congestion control algorithm may include a set of rules and/or a particular transmission rate. A congestion control algorithm may, for example, control flow rates for all QPs involved in a collective associated with the application 303, providing control per-QP. Another congestion control algorithm may, for example, provide control per-WQE by controlling transmission rates associated with individual operations associated with the collective. Another congestion control algorithm may provide per-message control by adjusting the rate for each message, packet, or for a particular number of messages or packets.

Once a congestion control algorithm is selected, the congestion controller 212 may implement congestion control logic by adjusting a transmission rate 330 based on the selected congestion control algorithm. To adjust the transmission rate 330, the congestion controller may, when the application 303 sends WQEs to the NIC, cause packets associated with the WQEs to be scheduled to be transmitted by the NIC at a particular rate. As should be appreciated, the congestion controller 212 may implement a set of congestion control algorithms at any given time as multiple congestion control settings can coexist. This enables different, parallel streams of information to be controlled separately. In some implementations, congestion control settings may apply to different applications, or a set of congestion control algorithms may apply to different types of data being sent by one particular application. As an example, a single application may be performing a reduction for one part of its computation and an all-to-all for another part of its computation and different congestion control algorithms may be applied to each operation. In some scenarios, the congestion controller 212 may determine no congestion control is required. For example, if the message size is relatively small, the congestion controller 212 may determine that no congestion control is necessary.

A congestion controller 212 may implement a method 400 as illustrated in Fig. 4. The method 400 may begin at 403, with a congestion controller 212 receiving application data from an application. The method 400 may be performed by a group of congestion controllers 212, with each congestion controller 212 being executed by a NIC of a different device operating in a network. The devices may host applications which operate together as a collective to perform tasks such as reduction operations. As the applications execute, the applications may provide application data to the congestion controllers 212. In some implementations, it should be appreciated that the congestion controllers 212 may be capable of reading the application data from memory used by the application, and that the application may not be required to actively share such information with the congestion controller 212.

As described above, application data may include information such as a message size, a network topology, a communication algorithm associated with the application, a number of peers associated with the application, and an operation associated with the application. In some implementations, the congestion controller 212 may be configured to determine such information about the application based on other data created by or relating to the application.

At 406, the congestion controller 212 may identify, based on the application data, one or more factors associated with the application. The one or more factors may include one or more of a message size, a network topology, a communication algorithm associated with the application, a number of peers associated with the application, and an operation associated with the application.

At 409, the congestion controller may generate a prediction, based on the one or more factors, of a pattern of traffic to be sent by the application.

The prediction may include an identification of the traffic pattern type, a time window for the traffic pattern, and a confidence score associated with the likelihood of occurrence of the traffic pattern. A traffic pattern type may include factors such as packet or message size, number of peers, network topology, communication algorithm, and/or other factors which may affect traffic.

The congestion controller 212 may be configured to produce an output indicating the type of traffic pattern projected to occur. Along with identifying the traffic pattern type, the congestion controller 212 may generate a timeframe during which the traffic pattern is expected to take place. The time frame may include a start time marking when the traffic pattern is predicted to begin, an end time after which the traffic pattern is predicted to have concluded, and/or a time length indicating the expected duration of the traffic pattern. Upon determining the traffic pattern type and/or time frame, the congestion controller 212 may in some implementations generate a confidence score quantifying a level of certainty regarding the prediction.

In some implementations, the congestion controller 212 may generate a prediction of a change in the pattern of traffic. For example, the congestion controller 212 may be capable of executing a learning model which predicts changes in traffic patterns over time. The prediction may be based on past traffic behavior of the system including the congestion controller 212 and/or other systems. For example, the congestion controller 212 may execute a machine learning model which may be trained by the congestion controller 212 and/or may be trained by a system in communication with the congestion controller 212.

At 412, the congestion controller 212 may select a transmission rate for the application based on predicted pattern. Selecting the transmission rate for the application may involve determining a maximum transmission rate such that congestion can be avoided. As an example, the transmission rate may be selected as a ratio of the number of peers and the full wire speed (FWS), i.e., the bandwidth of the system. Data transmitted at FWS, wire speed, or wire rate may be considered to be traveling at the maximum rate at which data can be transmitted through a network interface, switch, or other networking device, without incurring delays or data loss due to internal processing limitations or congestion. The transmission rate may be in terms of a percentage of a full wire speed. For example, a traffic pattern involving the device hosting the congestion controller communicating with one hundred nodes may result in a transmission rate of 1/100 FWS.

In some implementations, selecting the transmission rate may be performed in response to the prediction of a change in the pattern of traffic. For example, the congestion controller 212 may be configured to detect a change occurring or about to occur and may select the transmission rate in response.

In some implementations, selecting the transmission rate may involve selecting a congestion control algorithm based on the prediction of the pattern of traffic. The congestion control algorithm may be used by the congestion controller 212 to actively control the transmission rate. For example, a congestion control algorithm may be a dynamic control of the transmission rate which changes the transmission rate over time to meet target thresholds and/or other factors.

At 415, the congestion controller 212 may control a rate of traffic sent by the application based on the transmission rate. As should be appreciated, a transmission rate selected by a congestion controller 212 may be implemented in any number of ways. As an example, controlling the rate of traffic may involve outputting a transmission rate 330 and an indication of a particular flow or application 303 which should be affected by the transmission rate 330 to a request handler 336 as illustrated in Fig. 3. The request handler 336 may schedule the egress of packets or messages from the application 303 based on the transmission rate 330.

The systems and methods described herein may be used by, without limitation, non-autonomous vehicles, semi-autonomous vehicles (e.g., in one or more adaptive driver assistance systems (ADAS)), piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, underwater craft, drones, and/or other vehicle types. The systems and methods described herein may be used in augmented reality, virtual reality, mixed reality, robotics, security and surveillance, autonomous or semi-autonomous machine applications, and/or any other technology spaces in which one or more signal conductors may have at least two different states that consume different amounts of power.

The systems and methods described herein may be used by, without limitation, non-autonomous vehicles, semi-autonomous vehicles (e.g., in one or more adaptive driver assistance systems (ADAS)), piloted and un-piloted robots or robotic platforms, warehouse vehicles, off-road vehicles, vehicles coupled to one or more trailers, flying vessels, boats, shuttles, emergency response vehicles, motorcycles, electric or motorized bicycles, aircraft, construction vehicles, underwater craft, drones, and/or other vehicle types. Further, the systems and methods described herein may be used for a variety of purposes, by way of example and without limitation, for machine control, machine locomotion, machine driving, synthetic data generation, model training, perception, augmented reality, virtual reality, mixed reality, robotics, security and surveillance, simulation and digital twinning, autonomous or semi-autonomous machine applications, deep learning, environment simulation, object or actor simulation and/or digital twinning, data center processing, conversational AI, light transport simulation (e.g., ray-tracing, path tracing, etc.), collaborative content creation for 3D assets, cloud computing, web-hosted services or web-hosted platforms, and/or any other suitable applications.

Disclosed embodiments may be comprised in a variety of different systems such as automotive systems (e.g., a control system for an autonomous or semi-autonomous machine, a perception system for an autonomous or semi-autonomous machine), systems implemented using a robot, aerial systems, medial systems, boating systems, smart area monitoring systems, systems for performing deep learning operations, systems for performing simulation operations, systems for performing digital twin operations, systems implemented using an edge device, systems incorporating one or more virtual machines (VMs), systems for performing synthetic data generation operations, systems implemented at least partially in a data center, systems for performing conversational AI operations, systems for performing light transport simulation, systems for performing collaborative content creation for 3D assets, systems implemented at least partially using cloud computing resources, systems for implementing web-hosted services (e.g., for program optimization at runtime) or web-hosted platforms (e.g., integrated development environments that include program optimization as a service), as an application programming interface (API) between two or more separate applications or systems, and/or other types of systems.

### Data Center

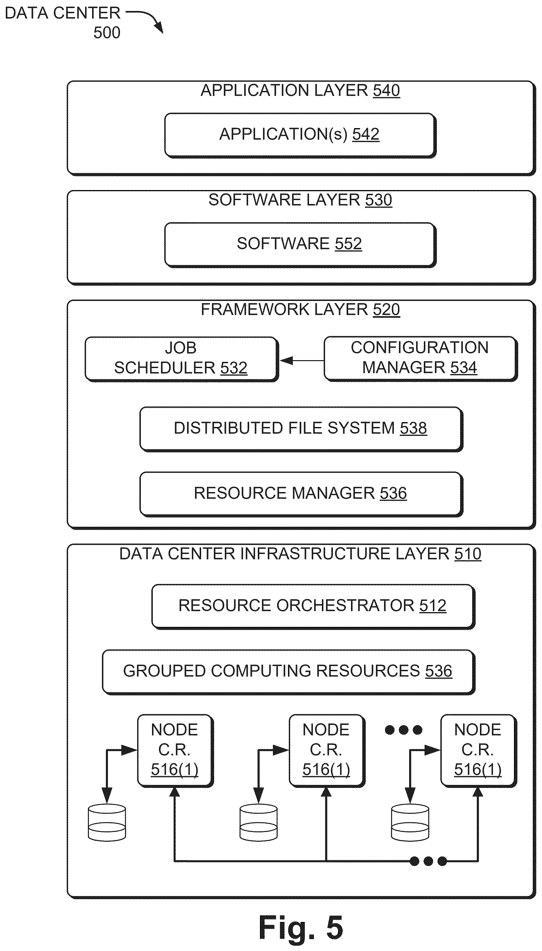

Fig. 5 illustrates an example data center 500, in accordance with at least one embodiment. In at least one embodiment, data center 500 includes, without limitation, a data center infrastructure layer 510, a framework layer 520, a software layer 530 and an application layer 540.

In at least one embodiment, as shown in Fig. 5, data center infrastructure layer 510 may include a resource orchestrator 512, grouped computing resources 514, and node computing resources (node C.R.s) 516(1)-516(N), where "N" represents any whole, positive integer. In at least one embodiment, node C.R.s 516(1)-516(N) may include, but are not limited to, any number of CPUs or other processors (including accelerators, FPGAs, DPUs in network devices, graphics processors, etc.), memory devices (e.g., dynamic read-only memory), storage devices (e.g., solid state or disk drives), network input/output (NW I/O) devices, network switches, virtual machines (VMs), power modules, and cooling modules, etc. In at least one embodiment, one or more node C.R.s from among node C.R.s 516(1)-516(N) may be a server having one or more of above-mentioned computing resources.

In at least one embodiment, grouped computing resources 514 may include separate groupings of node C.R.s housed within one or more racks (not shown), or many racks housed in data centers at various geographical locations (also not shown). Separate groupings of node C.R.s within grouped computing resources 514 may include grouped computers, network, memory or storage resources that may be configured or allocated to support one or more workloads. In at least one embodiment, several node C.R.s including CPUs or processors may grouped within one or more racks to provide compute resources to support one or more workloads. In at least one embodiment, one or more racks may also include any number of power modules, cooling modules, and network switches, in any combination.

In at least one embodiment, resource orchestrator 512 may configure or otherwise control one or more node C.R.s 516(1)-516(N) and/or grouped computing resources 514. In at least one embodiment, resource orchestrator 512 may include a software design infrastructure (SDI) management entity for data center 500. In at least one embodiment, resource orchestrator 512 may include hardware, software or some combination thereof.

In at least one embodiment, as shown in Fig. 5, framework layer 520 includes, without limitation, a job scheduler 532, a configuration manager 534, a resource manager 536 and a distributed file system 538. In at least one embodiment, framework layer 520 may include a framework to support software 552 of software layer 530 and/or one or more application(s) 542 of application layer 540. In at least one embodiment, software 552 or application(s) 542 may respectively include web-based service software or applications, such as those provided by Amazon Web Services, Google Cloud and Microsoft Azure. In at least one embodiment, framework layer 520 may be, but is not limited to, a type of free and open-source software web application framework such as Apache Spark^{™} (hereinafter "Spark) that may utilize distributed file system 538 for large-scale data processing (e.g., "big data). In at least one embodiment, job scheduler 532 may include a Spark driver to facilitate scheduling of workloads supported by various layers of data center 500. In at least one embodiment, configuration manager 534 may be capable of configuring different layers such as software layer 530 and framework layer 520, including Spark and distributed file system 538 for supporting large-scale data processing. In at least one embodiment, resource manager 536 may be capable of managing clustered or grouped computing resources mapped to or allocated for support of distributed file system 538 and job scheduler 532. In at least one embodiment, clustered or grouped computing resources may include grouped computing resource 514 at data center infrastructure layer 510. In at least one embodiment, resource manager 536 may coordinate with resource orchestrator 512 to manage these mapped or allocated computing resources.

In at least one embodiment, software 552 included in software layer 530 may include software used by at least portions of node C.R.s 516(1)-516(N), grouped computing resources 514, and/or distributed file system 538 of framework layer 520. One or more types of software may include, but are not limited to, Internet web page search software, e-mail virus scan software, database software, and streaming video content software.

In at least one embodiment, application(s) 542 included in application layer 540 may include one or more types of applications used by at least portions of node C.R.s 516(1)-516(N), grouped computing resources 514, and/or distributed file system 538 of framework layer 520. In at least one or more types of applications may include, without limitation, CUDA applications.

In at least one embodiment, any of configuration manager 534, resource manager 536, and resource orchestrator 512 may implement any number and type of self-modifying actions based on any amount and type of data acquired in any technically feasible fashion. In at least one embodiment, self-modifying actions may relieve a data center operator of data center 500 from making possibly bad configuration decisions and possibly avoiding underutilized and/or poor performing portions of a data center.

In at least one embodiment, the data center 500 may be used to implement the device 103a (see Fig. 1) and/or the computing device 203 (see Fig. 2). For example, the computing device 203 may include one or more of the grouped computing resources 514 and/or one or more of the C.R.s 516(1)-516(N). In at least one embodiment, one or more systems depicted in Fig. 5 are utilized to implement one or more systems and/or processes such as those described in connection with Figs. 1-4.

### Computer-Based Systems

The following figures set forth, without limitation, example computer-based systems that can be used to implement at least one embodiment.

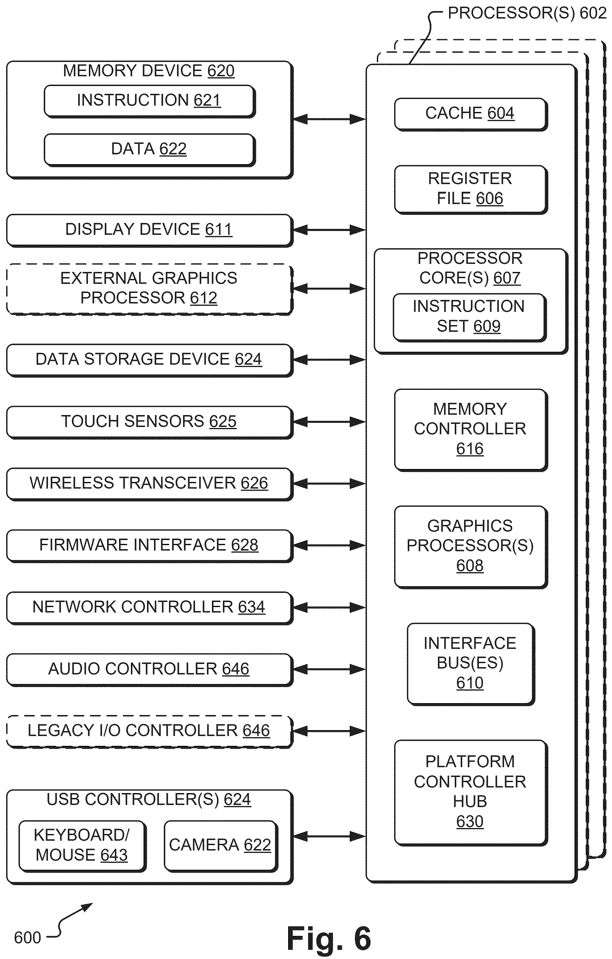

Fig. 6 illustrates a processing system 600, in accordance with at least one embodiment. In at least one embodiment, processing system 600 includes one or more processors 602 and one or more graphics processors 608, and may be a single processor desktop system, a multiprocessor workstation system, or a server system having a large number of processors 602 or processor cores 607. In at least one embodiment, processing system 600 is a processing platform incorporated within a system-on-a-chip (SoC) integrated circuit for use in mobile, handheld, or embedded devices.

In at least one embodiment, processing system 600 can include, or be incorporated within a server-based gaming platform, a game console, a media console, a mobile gaming console, a handheld game console, or an online game console. In at least one embodiment, processing system 600 is a mobile phone, smart phone, tablet computing device or mobile Internet device. In at least one embodiment, processing system 600 can also include, couple with, or be integrated within a wearable device, such as a smart watch wearable device, smart eyewear device, augmented reality device, or virtual reality device. In at least one embodiment, processing system 600 is a television or set top box device having one or more processors 602 and a graphical interface generated by one or more graphics processors 608.

In at least one embodiment, one or more processors 602 each include one or more processor cores 607 to process instructions which, when executed, perform operations for system and user software. In at least one embodiment, each of one or more processor cores 607 is configured to process a specific instruction set 609. In at least one embodiment, instruction set 609 may facilitate Complex Instruction Set Computing (CISC), Reduced Instruction Set Computing (RISC), or computing via a Very Long Instruction Word (VLIW). In at least one embodiment, processor cores 607 may each process a different instruction set 609, which may include instructions to facilitate emulation of other instruction sets. In at least one embodiment, processor core 607 may also include other processing devices, such as a digital signal processor (DSP).

In at least one embodiment, processor 602 includes cache memory ('cache) 604. In at least one embodiment, processor 602 can have a single internal cache or multiple levels of internal cache. In at least one embodiment, cache memory is shared among various components of processor 602. In at least one embodiment, processor 602 also uses an external cache (e.g., a Level 3 (L3) cache or Last Level Cache (LLC)) (not shown), which may be shared among processor cores 607 using known cache coherency techniques. In at least one embodiment, register file 606 is additionally included in processor 602 which may include different types of registers for storing different types of data (e.g., integer registers, floating point registers, status registers, and an instruction pointer register). In at least one embodiment, register file 606 may include general-purpose registers or other registers.

In at least one embodiment, one or more processor(s) 602 are coupled with one or more interface bus(es) 610 to transmit communication signals such as address, data, or control signals between processor 602 and other components in processing system 600. In at least one embodiment interface bus 610, in one embodiment, can be a processor bus, such as a version of a Direct Media Interface (DMI) bus. In at least one embodiment, interface bus 610 is not limited to a DMI bus and may include one or more Peripheral Component Interconnect buses (e.g., "PCI," PCI Express (PCIe)), memory buses, or other types of interface buses. In at least one embodiment processor(s) 602 include an integrated memory controller 616 and a platform controller hub 630. In at least one embodiment, memory controller 616 facilitates communication between a memory device and other components of processing system 600, while platform controller hub (PCH) 630 provides connections to Input/Output (I/O) devices via a local I/O bus.

In at least one embodiment, memory device 620 can be a dynamic random-access memory (DRAM) device, a static random-access memory (SRAM) device, flash memory device, phase-change memory device, or some other memory device having suitable performance to serve as processor memory. In at least one embodiment memory device 620 can operate as system memory for processing system 600, to store data 622 and instructions 621 for use when one or more processors 602 execute an application or process. In at least one embodiment, memory controller 616 also couples with an optional external graphics processor 612, which may communicate with one or more graphics processors 608 in processors 602 to perform graphics and media operations. In at least one embodiment, a display device 611 can connect to processor(s) 602. In at least one embodiment display device 611 can include one or more of an internal display device, as in a mobile electronic device or a laptop device or an external display device attached via a display interface (e.g., DisplayPort, etc.). In at least one embodiment, display device 611 can include a head mounted display (HMD) such as a stereoscopic display device for use in virtual reality (VR) applications or augmented reality (AR) applications.

In at least one embodiment, platform controller hub 630 enables peripherals to connect to memory device 620 and processor 602 via a high-speed I/O bus. In at least one embodiment, I/O peripherals include, but are not limited to, an audio controller 646, a network controller 634, a firmware interface 628, a wireless transceiver 626, touch sensors 625, a data storage device 624 (e.g., hard disk drive, flash memory, etc.). In at least one embodiment, data storage device 624 can connect via a storage interface (e.g., SATA) or via a peripheral bus, such as PCI, or PCIe. In at least one embodiment, touch sensors 625 can include touch screen sensors, pressure sensors, or fingerprint sensors. In at least one embodiment, wireless transceiver 626 can be a Wi-Fi transceiver, a Bluetooth transceiver, or a mobile network transceiver such as a 3G, 4G, or Long-Term Evolution (LTE) transceiver. In at least one embodiment, firmware interface 628 enables communication with system firmware, and can be, for example, a unified extensible firmware interface (UEFI). In at least one embodiment, network controller 634 can enable a network connection to a wired network. In at least one embodiment, a high-performance network controller (not shown) couples with interface bus 610. In at least one embodiment, audio controller 646 is a multi-channel high-definition audio controller. In at least one embodiment, processing system 600 includes an optional legacy I/O controller 640 for coupling legacy (e.g., Personal System 2 (PS/2)) devices to processing system 600. In at least one embodiment, platform controller hub 630 can also connect to one or more Universal Serial Bus (USB) controllers 642 connect input devices, such as keyboard and mouse 643 combinations, a camera 644, or other USB input devices.

In at least one embodiment, an instance of memory controller 616 and platform controller hub 630 may be integrated into a discreet external graphics processor, such as external graphics processor 612. In at least one embodiment, platform controller hub 630 and/or memory controller 616 may be external to one or more processor(s) 602. For example, in at least one embodiment, processing system 600 can include an external memory controller 616 and platform controller hub 630, which may be configured as a memory controller hub and peripheral controller hub within a system chipset that is in communication with processor(s) 602.

In at least one embodiment, the processing system 600 may be used to implement the device 103a (see Fig. 1) and/or the computing device 203 (see Fig. 2). In at least one embodiment, the computing device 203 may include one or more of the processor(s) 602, one or more of the processor core(s) 607, and/or one or more of the graphics processor(s) 608. In at least one embodiment, the interface bus 610 may be used to implement the congestion controller 212. In at least one embodiment, one or more systems depicted in Fig. 6 are utilized to implement one or more systems and/or processes such as those described in connection with Figs. 1-4.

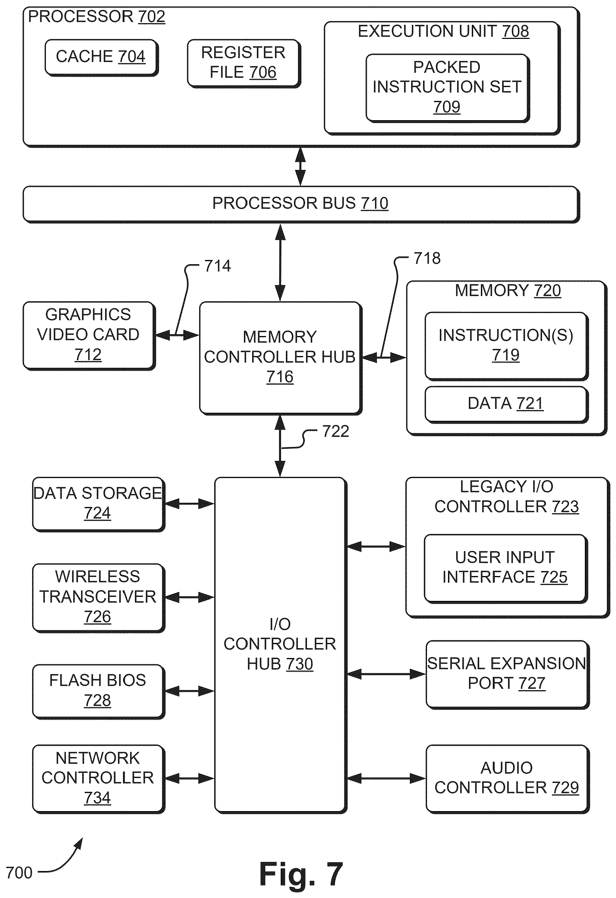

Fig. 7 illustrates a computer system 700, in accordance with at least one embodiment. In at least one embodiment, computer system 700 may be a system with interconnected devices and components, an SOC, or some combination. In at least one embodiment, computer system 700 is formed with a processor 702 that may include execution units to execute an instruction. In at least one embodiment, computer system 700 may include, without limitation, a component, such as processor 702 to employ execution units including logic to perform algorithms for processing data. In at least one embodiment, computer system 700 may include processors, such as PENTIUM^{®} Processor family, Xeon^{™}, Itanium^{®}, XScale^{™} and/or StrongArm^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 700 may execute a version of WINDOWS' operating system available from Microsoft Corporation of Redmond, Wash., although other operating systems (UNIX and Linux for example), embedded software, and/or graphical user interfaces, may also be used.

In at least one embodiment, computer system 700 may be used in other devices such as handheld devices and embedded applications. Some examples of handheld devices include cellular phones, Internet Protocol devices, digital cameras, personal digital assistants (PDAs), and handheld PCs. In at least one embodiment, embedded applications may include a microcontroller, a digital signal processor (DSP), an SoC, network computers (Net PCs), set-top boxes, network hubs, wide area network (WAN) switches, or any other system that may perform one or more instructions.

In at least one embodiment, computer system 700 may include, without limitation, processor 702 that may include, without limitation, one or more execution units 708 that may be configured to execute a Compute Unified Device Architecture (CUDA) (CUDA^{®} is developed by NVIDIA Corporation of Santa Clara, CA) program. In at least one embodiment, a CUDA program is at least a portion of a software application written in a CUDA programming language. In at least one embodiment, computer system 700 is a single processor desktop or server system. In at least one embodiment, computer system 700 may be a multiprocessor system. In at least one embodiment, processor 702 may include, without limitation, a CISC microprocessor, a RISC microprocessor, a VLIW microprocessor, a processor implementing a combination of instruction sets, or any other processor device, such as a digital signal processor, for example. In at least one embodiment, processor 702 may be coupled to a processor bus 710 that may transmit data signals between processor 702 and other components in computer system 700.

In at least one embodiment, processor 702 may include, without limitation, a Level 1 (L1) internal cache memory (cache) 704. In at least one embodiment, processor 702 may have a single internal cache or multiple levels of internal cache. In at least one embodiment, cache memory may reside external to processor 702. In at least one embodiment, processor 702 may also include a combination of both internal and external caches. In at least one embodiment, a register file 706 may store different types of data in various registers including, without limitation, integer registers, floating point registers, status registers, and instruction pointer register.

In at least one embodiment, execution unit 708, including, without limitation, logic to perform integer and floating-point operations, also resides in processor 702. Processor 702 may also include a microcode (ucode) read only memory (ROM) that stores microcode for certain macro instructions. In at least one embodiment, execution unit 708 may include logic to handle a packed instruction set 709. In at least one embodiment, by including packed instruction set 709 in an instruction set of a general-purpose processor 702, along with associated circuitry to execute instructions, operations used by many multimedia applications may be performed using packed data in a general-purpose processor 702. In at least one embodiment, many multimedia applications may be accelerated and executed more efficiently by using full width of a processor's data bus for performing operations on packed data, which may eliminate a need to transfer smaller units of data across a processor's data bus to perform one or more operations one data element at a time.

In at least one embodiment, execution unit 708 may also be used in microcontrollers, embedded processors, graphics devices, DSPs, and other types of logic circuits. In at least one embodiment, computer system 700 may include, without limitation, a memory 720. In at least one embodiment, memory 720 may be implemented as a DRAM device, an SRAM device, flash memory device, or other memory device. Memory 720 may store instruction(s) 719 and/or data 721 represented by data signals that may be executed by processor 702.

In at least one embodiment, a system logic chip may be coupled to processor bus 710 and memory 720. In at least one embodiment, the system logic chip may include, without limitation, a memory controller hub (MCH) 716, and processor 702 may communicate with MCH 716 via processor bus 710. In at least one embodiment, MCH 716 may provide a high bandwidth memory path 718 to memory 720 for instruction and data storage and for storage of graphics commands, data and textures. In at least one embodiment, MCH 716 may direct data signals between processor 702, memory 720, and other components in computer system 700 and to bridge data signals between processor bus 710, memory 720, and a system I/O 722. In at least one embodiment, system logic chip may provide a graphics port for coupling to a graphics controller. In at least one embodiment, MCH 716 may be coupled to memory 720 through high bandwidth memory path 718 and graphics/video card 712 may be coupled to MCH 716 through an Accelerated Graphics Port (AGP) interconnect 714.

In at least one embodiment, computer system 700 may use system I/O 722 that is a proprietary hub interface bus to couple MCH 716 to I/O controller hub (ICH) 730. In at least one embodiment, ICH 730 may provide direct connections to some I/O devices via a local I/O bus. In at least one embodiment, local I/O bus may include, without limitation, a high-speed I/O bus for connecting peripherals to memory 720, a chipset, and processor 702. Examples may include, without limitation, an audio controller 729, a firmware hub (flash BIOS) 728, a wireless transceiver 726, a data storage 724, a legacy I/O controller 723 containing a user input interface 725 and a keyboard interface, a serial expansion port 727, such as a USB, and a network controller 734. Data storage 724 may comprise a hard disk drive, a floppy disk drive, a CD-ROM device, a flash memory device, or other mass storage device.

In at least one embodiment, Fig. 7 illustrates a system, which includes interconnected hardware devices or "chips." In at least one embodiment, Fig. 7 may illustrate an example SoC. In at least one embodiment, devices illustrated in Fig. 7 may be interconnected with proprietary interconnects, standardized interconnects (e.g., PCIe), or some combination thereof. In at least one embodiment, one or more components of system 700 are interconnected using compute express link (CXL) interconnects.

In at least one embodiment, the computer system 700 may be used to implement the device 103a (see Fig. 1) and/or the computing device 203 (see Fig. 2). In at least one embodiment, the computing device 203 may include the processor 702 and/or the graphics/video card 712. In at least one embodiment, the processor bus 710 may be used to implement the congestion controller 212. In at least one embodiment, one or more systems depicted in Fig. 7 are utilized to implement one or more systems and/or processes such as those described in connection with Figs. 1-4.

The term "automatic" and variations thereof, as used herein, refers to any appropriate process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material."

The terms "determine," "calculate," "compute," and variations thereof, as used herein, are used interchangeably, and include any appropriate type of methodology, process, operation, or technique.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and this disclosure.

Use of terms "a," "an," "the," and similar referents in context of describing disclosed embodiments (as well as in the context of the following claims) are to be construed to cover both singular and plural, unless otherwise indicated herein or clearly contradicted by context, and not as a definition of a term. The term "and/or" is to be construed as including any and all combinations of one or more of the associated listed items. Terms "comprising," "having," "including," and "containing" are to be construed as open-ended terms (meaning "including, but not limited to,) unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into the specification as if it were individually recited herein. In at least one embodiment, use of the term "set" (e.g., "a set of items) or "subset" unless otherwise noted or contradicted by context, is to be construed as a nonempty collection comprising one or more members. Further, unless otherwise noted or contradicted by context, the term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in an illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, the number of items in a plurality is at least two but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, a set of non-transitory computer-readable storage media comprises multiple non-transitory computer-readable storage media and one or more individual non-transitory storage media of multiple non-transitory computer-readable storage media lack all of code while multiple non-transitory computer-readable storage media collectively store all of code. In at least one embodiment, executable instructions are executed such that different instructions are executed by different processors-for example, a non-transitory computer-readable storage medium store instructions and a main central processing unit (CPU) executes some of instructions while a graphics processing unit (GPU) executes other instructions. In at least one embodiment, different components of a computer system have separate processors and different processors execute different subsets of instructions.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as) provided herein, is intended merely to better illuminate embodiments of disclosure and does not pose a limitation on scope of disclosure unless otherwise claimed. No language in specification should be construed as indicating any non-claimed element as essential to practice of disclosure.

Any references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may not be intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still co-operate or interact with each other.

Unless specifically stated otherwise, it may be appreciated that throughout specification terms such as "processing," "computing," "calculating," "determining," or the like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, the term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In the present document, references may be made to obtaining, acquiring, receiving, or inputting analog or digital data into a subsystem, computer system, or computer-implemented machine. In at least one embodiment, the process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or inter-process communication mechanism.

Although descriptions herein set forth example implementations of described techniques, other architectures may be used to implement described functionality and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A system comprising one or more circuits to:
identify, based on data associated with an application, one or more factors associated with the application;
generate a prediction, based on the one or more factors, of a pattern of traffic to be sent by the application;
select a transmission rate for the application based on predicted pattern; and
control a rate of traffic sent by the application based on the transmission rate.

2. The system of claim 1, wherein the one or more factors comprise one or more of:
a message size, a network topology, a communication algorithm associated with the application, a number of peers associated with the application, and an operation associated with the application.

3. The system of claim 1 or 2, wherein the traffic is egressing from the system.

4. The system of claim 1, 2, or 3, wherein the one or more factors are identified based on data received by the system from the application.

5. The system of any of claims 1-4, wherein the one or more circuits are further to generate a prediction of a change in the pattern of traffic.

6. The system of claim 5, wherein selecting the transmission rate is performed in response to the prediction of the change in the pattern of traffic.

7. The system of any of claims 1-6, wherein the one or more circuits are further to select a congestion control algorithm based on the prediction of the pattern of traffic.

8. The system of any of claims 1-7, wherein the transmission rate is a percentage of a full wire speed.

9. A network interface controller comprising one or more circuits to:
identify, based on data associated with an application, one or more factors associated with the application;
generate a prediction, based on the one or more factors, of a pattern of traffic to be sent by the application;
select a transmission rate for the application based on predicted pattern; and
control a rate of traffic sent by the application based on the transmission rate.

10. The network interface controller of claim 9, wherein the one or more factors comprise one or more of: a message size, a network topology, a communication algorithm associated with the application, a number of peers associated with the application, and an operation associated with the application.

11. The network interface controller of claim 9 or 10, wherein the traffic is egressing from the network interface controller.

12. The network interface controller of claim 9, 10, or 11, wherein the one or more factors are identified based on data received by the network interface controller from the application.

13. The network interface controller of claim 9-12, wherein the one or more circuits are further to generate a prediction of a change in the pattern of traffic.

14. The network interface controller of claim 13, wherein selecting the transmission rate is performed in response to the prediction of the change in the pattern of traffic.

15. A method comprising:
identifying, based on data associated with an application, one or more factors associated with the application;
generating a prediction, based on the one or more factors, of a pattern of traffic to be sent by the application;
selecting a transmission rate for the application based on predicted pattern; and
controlling a rate of traffic sent by the application based on the transmission rate.
